(19) Europäisches Patentamt
European Patent Office
Office européen des brevets

(11) **EP 4 746 097 A1**

(12) **EUROPEAN PATENT APPLICATION**

(43) Date of publication:
**20.05.2026 Bulletin 2026/21**

(21) Application number: **24213791.7**

(22) Date of filing: **19.11.2024**

(51) International Patent Classification (IPC):
**H01M 10/0525** (2010.01)    **H01M 10/48** (2006.01)

(52) Cooperative Patent Classification (CPC):
**H01M 10/0525; H01M 10/486**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **IMEC VZW**
**3001 Leuven (BE)**
• **Katholieke Universiteit Leuven
KU Leuven Research & Development
3000 Leuven (BE)**

(72) Inventors:
• **STOFFELS, Wout**
**3190 Boortmeerbeek (BE)**
• **DE TAEYE, Louis**
**2800 Mechelen (BE)**
• **VEREECKEN, Philippe**
**3321 Hoegaarden (BE)**

(74) Representative: **Winger**
**Mouterij 16 bus 101
3190 Boortmeerbeek (BE)**

(54) **THERMOGALVANIC SENSOR FOR LITHIUM-ION BATTERIES**

(57)     A thermogalvanic temperature sensor (100) integrated into a lithium-ion battery. The sensor comprises a first sensor electrode (110) and a second sensor electrode (120), both in ionic contact with the electrolyte (240) of the battery. The first sensor electrode (110) and second sensor electrode (120) have different thermogalvanic coefficients, allowing them to generate a temperature-dependent potential difference. A protective ion-conductive coating (130) is applied to the sensor electrodes to shield them while maintaining ionic conductivity with the electrolyte. This configuration enables accurate, real-time temperature monitoring within the battery, enhancing thermal management and operational safety.

**FIG. 4**

EP 4 746 097 A1

## Description

### Field of the invention

The invention relates to the field of temperature sensors. More specifically it relates to a thermogalvanic temperature sensor for lithium-ion batteries.

### Background of the invention

Battery management systems (BMS) in electric vehicles typically have access to limited information about the internal battery cell state due to the lack of advanced, cell-integrated sensors. In particular, BMS typically use a small number of temperature sensors per battery pack that are attached externally to the battery cells. As such, only the average temperature outside the cells is known where the internal cell temperature can differ strongly from the external temperature. Moreover, the sudden temperature changes inside a cell take time to reach its exterior, delaying detection of such changes, hence delaying implementation of the associated safety protocols as well. With integrated temperature sensors, dangerous situations are detected much more quickly and more accurately.

Existing research has attempted to address these issues by integrating various types of sensors within the battery cell. For example, thermistors, thermocouples, and resistance temperature detectors (RTDs) have been explored as potential internal temperature sensors. However, these approaches often introduce significant volumes and complexity to the battery structure, interfering with battery function and capacity. Moreover, these sensors tend to degrade over time due to chemical reactions with the electrolyte, compromising their reliability for long-term applications like electric vehicles.

Thus, there is a need for sensors that can reliably monitor the internal temperature of lithium-ion batteries over their entire lifespan, with minimal impact on battery volume and performance.

Finally, there is also a broadly recognized need to include a reference electrode inside battery cells to measure the electric potential of the battery electrodes. A reference electrode can provide information about e.g. the state-of-charge or the state-of-health of a battery electrode, by measuring its electric potential. However, in existing research into integrated reference electrodes, similar concerns of large volumes and degradation of such devices hold.

### Summary of the invention

It is an object of embodiments of the present invention to provide a sensor for lithium-ion batteries that enables monitoring of internal battery cell temperature. It is an object of embodiments of the present invention to provide a battery comprising such a sensor and to provide a method for monitoring the internal temperature of a lithium-ion battery.

The above objectives are accomplished by a device and method according to the present invention.

In a first aspect, embodiments of the present invention relate to a thermogalvanic temperature sensor integrated into a lithium-ion battery. The sensor comprises:

- a first sensor electrode and a second sensor electrode, wherein both sensor electrodes are in ionic contact with an electrolyte of the lithium-ion battery,
- wherein the first sensor electrode and the second sensor electrode have different thermogalvanic coefficients,
- and wherein a protective ion-conductive coating is present on the sensor electrodes.

It is an advantage of embodiments of the present invention that the potential difference between the sensor electrodes is temperature dependent, allowing the sensor to measure the internal temperature of the battery.

It is an advantage of embodiments of the present invention that the sensor electrodes can be used as reference electrodes for monitoring the potential of the battery electrodes. It is an advantage of this double functionality that the sensor can perform multiple functions (temperature sensing and potential monitoring) without requiring separate sensors or additional components for each of these functions.

It is an advantage of embodiments of the present invention that the coating stabilizes the interface between the sensor electrodes and the electrolyte of the battery to prevent side reactions and degradation of the sensor over time. The coating prevents unwanted side reactions between the sensor electrodes and the battery's electrolyte, which could otherwise degrade the sensor's performance or introduce drift in the measurements over time.

In embodiments of the present invention the first sensor electrode is a lithium-ion electrode.

In embodiments of the present invention the second sensor electrode comprises lithium metal.

In embodiments of the present invention the second sensor electrode is a lithium-ion electrode.

In embodiments of the present invention the protective ion-conductive coating comprises a solid state electrolyte (ceramic or other). The ion-conductive coating may be an ionically transparent thin-film deposited through atomic layer deposition (e.g. alumina or titania thin films). In embodiments of the present invention the protective ion-conductive coating comprises lithium phosphorus oxynitride or lithium lanthanum titanium oxide.

In embodiments of the present invention the first sensor electrode and/or the second sensor electrode and/or the ion-conductive coatings are thin films.

In embodiments of the present invention the sensor is configured for operating as both a temperature sensor and a potential sensor (i.e. reference electrode) for the lithium-ion battery.

In a second aspect embodiments of the present invention relate to a lithium-ion battery comprising:

- a battery housing containing a positive battery electrode, a negative battery electrode, an electrolyte,
- and a thermogalvanic temperature sensor according to any embodiments of the present invention. The sensor is integrated within the battery and in ionic contact with the battery's electrolyte.

It is an advantage of embodiments of the present invention that precise, real-time temperature measurements within the lithium-ion battery are possible. Traditional temperature sensors, such as those mounted outside the battery, only measure external or surface temperatures, which can differ significantly from the actual internal temperature. External sensors can also suffer significant time delays needed for an internal thermal event to diffuse towards the exterior. Internal sensors therefore give faster information, which is especially important in situations where a response (e.g. change cooling setting, emergency shutdown, ...) to sudden changes in temperature is needed.

It is an advantage of embodiments of the present invention that the design ensures that the sensor takes up minimal space within the battery and therefore does not significantly affect the battery's energy density or functionality, as opposed to larger internal sensors.

It is an advantage of embodiments of the present invention that the sensor electrodes of the temperature sensor can also serve as reference electrodes for monitoring the charge state of the battery's electrodes, by monitoring the potential of the battery electrodes. This dual functionality improves the sensor's efficiency and utility by allowing it to perform multiple roles (temperature sensing and potential monitoring) without requiring additional sensors or components. This dual functionality is enabled by the contact of the sensor electrodes with the electrolyte of the battery: a sensor with an internal electrolyte but no chemical contact with the battery electrolyte cannot be used as a reference electrode for monitoring the potential of the battery electrodes simultaneously.

In embodiments of the present invention the electrolyte is a liquid electrolyte.

In embodiments of the present invention the electrolyte is a solid electrolyte.

In embodiments of the present invention the thermogalvanic temperature sensor is positioned in proximity to the positive electrode of the battery to monitor temperature variations near the positive electrode. In embodiments of the present invention the thermogalvanic temperature sensor is positioned in proximity to the negative electrode of the battery to monitor temperature variations near the negative electrode.

In a third aspect embodiments of the present invention relate to a method for monitoring the internal temperature of a lithium-ion battery. The method comprises:

- integrating a thermogalvanic temperature sensor according to the present invention within the battery wherein electrolyte of the battery is used as electrolyte for the thermogalvanic temperature sensor,
- measuring a temperature-dependent potential difference between the first sensor electrode and the second sensor electrode,
- determining the internal temperature of the battery based on the measured potential difference.

In embodiments of the present invention the method comprises recalibrating the sensor by applying a current to the sensor electrodes to account for changes in the state of charge of the sensor electrodes.

It is thereby an advantage of embodiments of the present invention that for thin-film sensor electrodes only a minimum amount of current is required.

In embodiments of the present invention the method comprises measuring the potential difference between one of the sensor electrodes of the thermogalvanic temperature sensor and the positive electrode of the lithium-ion battery or between one of the sensor electrodes and the negative electrode of the battery.

It is an advantage of embodiments of the present invention that the thermogalvanic temperature sensor can be used as a reference electrode. It is a further advantage that measurements can be corrected for temperature effects, since the sensor measures this quantity as well.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 shows a schematic drawing of a thermogalvanic temperature sensor, without the protective coating, in accordance with embodiments of the present invention.

FIG. 2 illustrates a thermogalvanic temperature sensor with a protective coating covering only the sensor electrodes and leads, in accordance with embodiments of the present invention.

FIG. 3 illustrates a thermogalvanic temperature sensor with a protective coating applied solely on the sensor electrodes, in accordance with embodiments of the present invention.

FIG. 4 shows a schematic drawing of a cross-section of a thermogalvanic temperature sensor in accordance with embodiments of the present invention.

FIG. 5 shows a schematic representation of a lithium-ion battery with an integrated thermogalvanic temperature sensor in contact with the electrolyte, in accordance with embodiments of the present invention.

FIG. 6 shows the layered structure of a battery stack, comprising thermogalvanic temperature sensors in accordance with embodiments of the present invention.

FIG. 7 illustrates the principle of generating a temperature-dependent potential difference using two sensor electrodes with different thermogalvanic properties.

FIG. 8 plots the temperature-dependent potential difference between a lithium metal sensor electrode and a partially lithiated silicon sensor electrode with a LiPON coating of a thermogalvanic temperature sensor in accordance with embodiments of the present invention.

FIG. 9 shows an exemplary flow chart of a method for monitoring the internal temperature of a lithium-ion battery in accordance with embodiments of the present invention.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention a sensor electrode is being described as being in in ionic contact with the electrolyte of the lithium-ion battery, this means that electrochemical exchange of ions between the sensor electrode and the electrolyte is possible. Therefore the coating present on the sensor electrodes is ion-conductive.

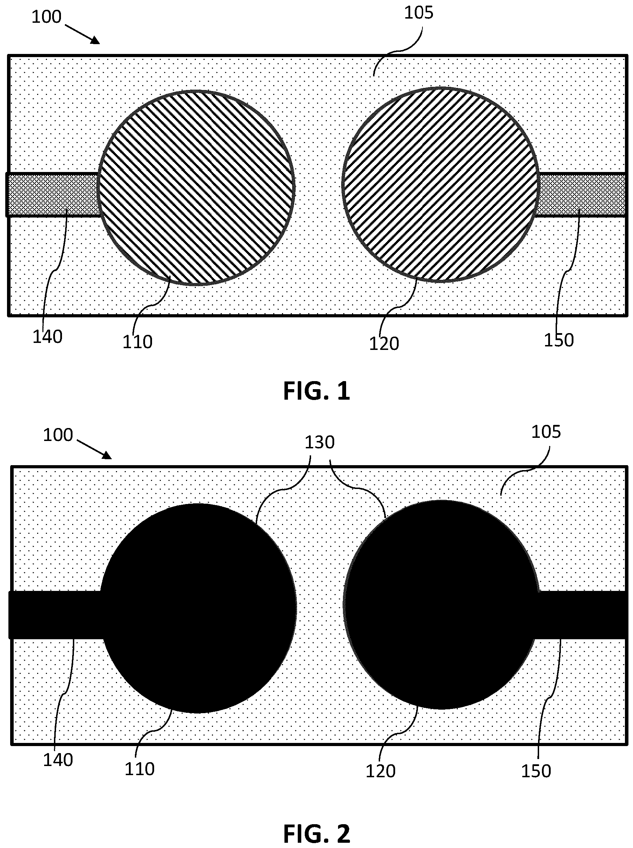

In a first aspect embodiments of the present invention relate to a thermogalvanic temperature sensor (100) integrated into a lithium-ion battery. The sensor (100) comprises a first sensor electrode (110) and a second sensor electrode (120), both in ionic contact with the battery's electrolyte (240). The first and second sensor electrodes (110, 120) have different thermogalvanic coefficients, and a protective ion-conductive coating (130) is present on the sensor electrodes. In embodiments of the present invention a first electronic lead (140) is connected to the first sensor electrode (110) and a second electronic lead (150) is connected to the second sensor electrode (120). Examples of such temperature sensors are schematically illustrated in FIG. 1 to FIG. 4.

FIG. 1 illustrates the structure of the sensor without the protective coating, showing the first electronic lead (140) connected to the first sensor electrode (110) and the second electronic lead (150) connected to the second sensor electrode (120), all positioned on the sensor substrate (105).

Different options are possible for the coating. The entire sensor may be covered with one coating, only the sensor electrodes and the leads may be covered with the coating, or only the sensor electrodes may be covered with the coating. The coatings on different sensor electrodes and/or leads may be made of the same material or a different material may be used per sensor electrode and/or leads.

FIG. 2 illustrates the structure of the sensor when only the sensor electrodes and the leads are covered with the coating.

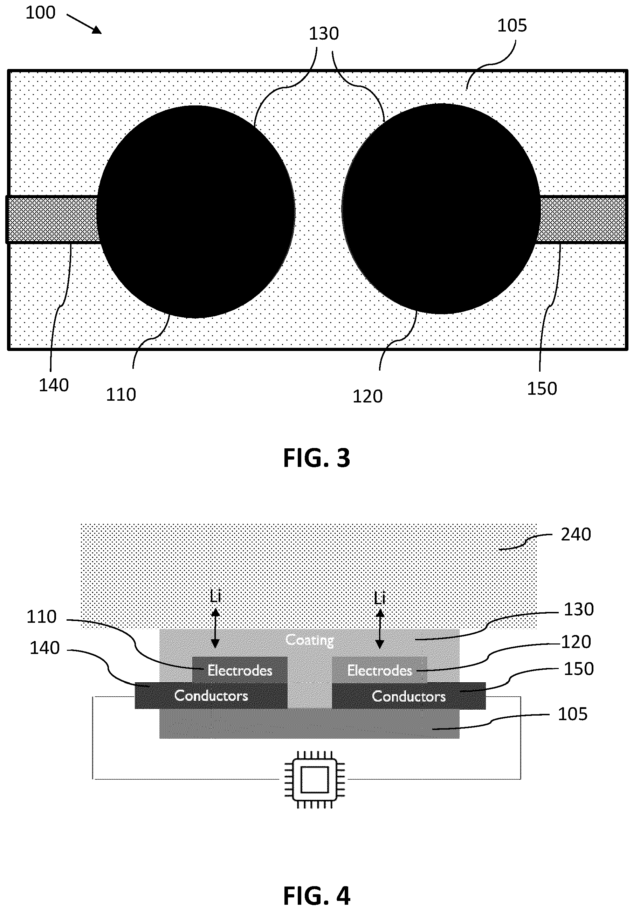

FIG. 3 illustrates the structure of the sensor when only the sensor electrodes are covered with the coating.

In embodiments of the present invention both sensor electrodes (110, 120) can exchange lithium ions with the battery electrolyte (240). Because each sensor electrode material has a different response to temperature changes, the potential difference $dU_{total}$ between two sensor electrodes depends on the temperature according to:

$$\alpha_{total} = \frac{dU_{total}}{dT} = \alpha_1 - \alpha_2.$$

wherein $\alpha 1$ is the thermogalvanic coefficient of the first sensor electrode (110) and $\alpha_2$ is the thermogalvanic

coefficient of the second sensor electrode (120).

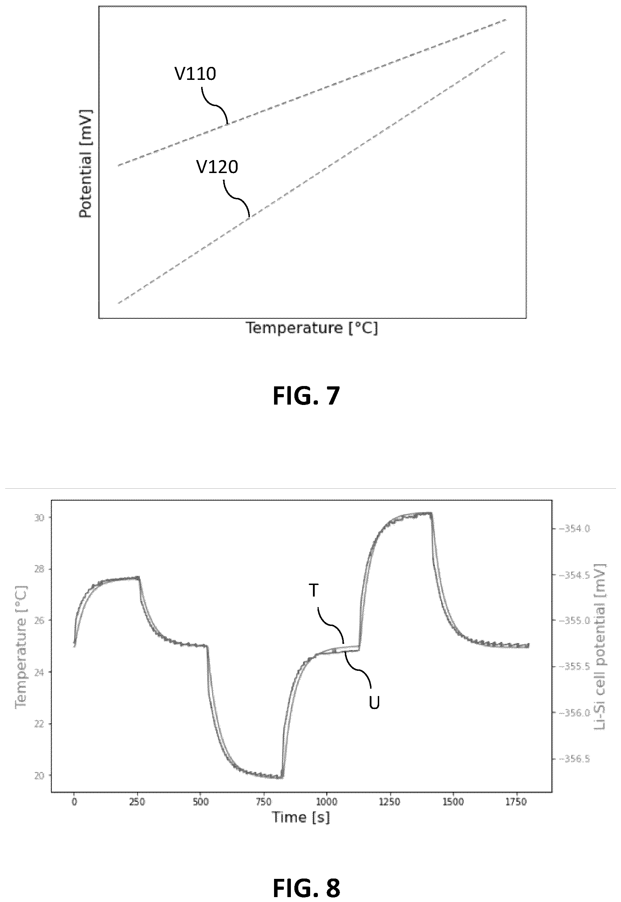

This enables a potentiometric measurement of the temperature. The principle of generating a temperature-dependent potential difference by using two sensor electrodes with different thermogalvanic properties is illustrated in FIG. 7. This figure shows the voltage (V110) in function of the temperature for the first sensor electrode and shows the voltage (V120) in function of the temperature for the second sensor electrode.

A thermogalvanic temperature sensor (100) in accordance with embodiments of the present invention may be produced as follows. A thin, electrically and chemically insulating foil substrate (105) may be provided. Such a substrate (105) is shown in FIG. 4. Next, micropatterned electronic leads (140, 150) may be fabricated through photolithography. Then, thin films of two different lithium-ion electrode materials (110, 120) may be deposited in contact with the electronic leads, through e.g. electrochemical deposition. Finally, an ion-conductive, protective coating (130) may be deposited to maintain a stable chemical interface and easy lithium-ion transfer.

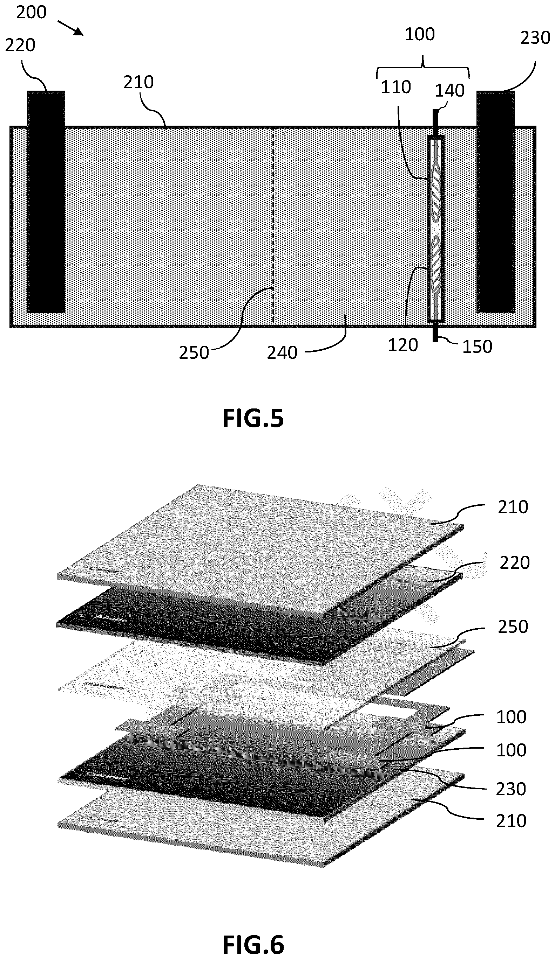

In a second aspect, embodiments of the present invention relate to a lithium-ion battery (200) comprises a battery housing (210) containing a positive battery electrode (220), a negative battery electrode (230), and an electrolyte (240). The battery further includes a thermogalvanic temperature sensor (100) according to embodiments of the present invention. The sensor is integrated within the battery and is in contact with the battery's electrolyte (240). In embodiments of the present invention the lithium-ion battery (200) also comprises a separator (250) between the positive battery electrode (220) and the negative battery electrode (230). A schematic drawing of such a battery is shown in FIG. 5. This is representative of the qualitative concept, but not of the geometry of a real battery or of the integration. Typically, a battery consists of a stack of battery electrode and electrolyte/separator layers, with the former taking a significant part of the volume. The combination of a positive battery electrode (cathode), a negative battery electrode (anode), and an electrolyte, along with a separator describes a cell of a battery. A battery can be composed of multiple cells, which are connected together in series, parallel, or a combination of both to achieve the desired voltage and capacity.

The electronic leads (140, 150) of the sensor (100) exit the battery, through a hole in the battery housing (210). In embodiments of the present invention the sensor is small compared to the electrolyte volume: a thickness on the order of 500 nm - 10$\mu$m is maintained, and a lateral dimension on the order of 10 $\mu$m - 1mm is maintained.

FIG. 6 shows a layer stack of a battery 200 in accordance with embodiments of the present invention. The stack assembly comprises the following components:

1. Battery Housing (210): The outer structure that provides containment and protection for the internal components of the stack. The housing (210) ensures the stability and integrity of the stack assembly and maintains the proper positioning of all other elements.

2. Positive Battery Electrode (220): Positioned within the housing (210), this battery electrode serves as the positive terminal for the battery stack.

3. Negative Battery Electrode (230): Positioned within the housing (210), this battery electrode serves as the negative terminal for the battery stack.

4. Electrolyte (240): Filling the space between the positive battery electrode (220) and the negative battery electrode (230), the electrolyte (240) provides a medium for ionic conductivity, allowing ions to move freely within the stack. The electrolyte (240) is essential for the operation and performance of the stack.

5. Thermogalvanic Temperature Sensors (100): Integrated within the stack structure, the thermogalvanic temperature sensors (100), in accordance with embodiments of the present invention are in contact with the electrolyte (240) and are designed to monitor the temperature of the battery. The sensors (100) comprise sensor electrodes with different thermogalvanic coefficients, enabling accurate thermal measurements within the battery.

6. Separator (250): Physically divides the anode and cathode to prevent them from touching and short-circuiting. The separator is porous, allowing lithium ions to pass through it via the electrolyte. The pores of the separator are filled with the electrolyte and the electrolyte surrounds the separator.

7. Battery Housing (210): The second reference to the housing (210) emphasizes its encompassing role, providing mechanical support and environmental isolation for the internal battery electrodes and sensor.

A lithium-ion battery (200) in accordance with embodiments of the present invention may comprise a plurality of such stacks.

In embodiments of the present invention the first sensor electrode (110) is a lithium-ion electrode and/or the second sensor electrode (120) is a lithium-ion electrode (i.e. electrodes that can exchange lithium ions with an electrolyte). These materials are chosen for their ability to exchange lithium ions with the electrolyte. Such electrodes can be used to generate a temperature-dependent voltage.

Preferably the sensor electrodes are thermally and chemically stable within the expected operating temperature range. This range is approximately -20°C to +80°C for electric vehicle applications.

Preferably the material of the sensor electrodes is selected for its electrochemical potential stability. The sensor electrodes' electrochemical potential should remain consistent, independent of temperature fluctuations.

Preferably the two sensor electrodes exhibit significantly different thermogalvanic coefficients to maximize the thermal sensitivity of the sensor voltage, providing a high thermal derivative. In embodiments of the present invention the sensitivity of the sensor has a value ranging between 0.1 mV/K and 10 mV/K.

In embodiments of the present invention the sensor electrodes have a lithium exchange reaction with an electrochemical potential that lies within the electrochemical window of the electrolyte. For typical liquid electrolytes like carbonates, that is roughly between 1V and 4V versus Li/Li+, though advancements may expand this window to 0V-5V.

In embodiments of the present invention the materials are selected to ensure that the electrode deposition process is practical, which also enhances manufacturability. For example, materials may be selected that can be formed and processed at low temperatures, such as materials that can be deposited by printing.

Suitable electrode materials include:

- Intercalation-Based Electrodes: Such as certain transition metal oxides and phosphates.
- Metal Alloying Electrodes: Composed of lithium-transition metal alloys ($Li_nM$ where M is a transition metal).
- Conversion Electrodes: Involving chemical conversion reactions.
- Prussian Blue Analogues: Specifically transition metal hexacyanoferrates, which excel in thermal stability, adjustable thermogalvanic behavior, compatibility between its electrochemical potential around 3V and the electrolyte window, and ease of deposition.

In embodiments of the present invention the first sensor electrode and/or the second sensor electrode comprises a lithium-intercalation material which is at least partially lithiated. The lithium-intercalation material may for example be selected from the group consisting of lithium titanate (Li4Ti5O12) and silicon (Si).

In embodiments of the present invention the second sensor electrode (120) comprises lithium metal. Such a lithium metal electrode is particularly useful as reference electrode.

The protective ion-conductive coating applied to these sensor electrodes must allow lithium ions to pass freely between sensor electrodes and the electrolyte. The coating is electronically insulating to prevent side reactions between sensor electrodes and the electrolyte. The interface between coating and electrolyte must be chemically stable to avoid side reactions during sensor operation.

Suitable coating materials include ion-conductive solid electrolytes such as lithium phosphorus oxynitrate. Ceramic solid electrolytes like lithium phosphorus oxynitride or lithium lanthanum titanium oxide (LLTO), and atomic layer deposition (ALD) coatings (e.g. of conformal thin-films such as aluminum oxide or titanium oxide), and molecular layer deposition (MLD) coatings may be used. Combining different coatings could further optimize performance by leveraging complementary properties.

In embodiments of the present invention, the first sensor electrode (110), the second sensor electrode (120), and/or the ion-conductive coatings (130) are implemented as thin films. Using thin films for these components offers several advantages, including precise control over thickness, enhanced surface-to-volume ratios, and improved integration within compact devices. Thin films allow for efficient layering and can be deposited with high uniformity, contributing to both the performance and manufacturability of the device. Additionally, the use of thin films can optimize ion conductivity and facilitate controlled interactions with the electrolyte, thereby enhancing the overall functionality and reliability of the system. In embodiments of the present invention the thickness of the protective ion-conductive coating may for example range between 1nm and 10 $\mu$m. In embodiments of the present invention the thickness of the sensor electrodes may for example range between 10 nm and 1$\mu$m.

The potential difference (U) between a lithium metal sensor electrode and a partially lithiated silicon sensor electrode with a LiPON coating, of an exemplary thermogalvanic temperature sensor in accordance with embodiments of the present invention, was measured at various temperatures (T). As can be seen in FIG. 8, the potential difference responds to changes in the electrode temperature with a signal strength of 0.25 mV/K. This is a stronger signal than well-established thermocouples or resistance-based sensors (with realistic probe currents) can deliver.

In embodiments of the present invention, the sensor is designed to function dually as both a temperature sensor and a reference electrode within the lithium-ion battery (200). The first sensor electrode (110) or the second sensor electrode (120) may be used as reference electrode for electrochemically determining the potential of a battery electrode. The reference electrode measures the electrochemical potential of the electrolyte in relation to the positive (220) or negative (230) battery electrode of the lithium-ion battery. This measurement provides a stable reference point against which the voltage of the positive (220) or negative (230) battery electrode can be measured independently, allowing for precise monitoring of each battery electrode's potential during charging and discharging cycles.

In embodiments of the present invention voltage-sensing circuits may be provided for measuring a voltage across electrodes (e.g. between the electrodes of the sensor for measuring a voltage which is indicative of the temperature or between an electrode of the sensor and an electrode of the battery when the sensor is used as reference electrode).

This dual functionality enables the sensor to continuously monitor the internal temperature of the battery, providing real-time thermal data that is crucial for managing battery performance and preventing overheating. Simultaneously, the sensor serves as a stable reference electrode, allowing accurate measurement of the battery's electrochemical potential. This dual-purpose design simplifies the system architecture by integrating two essential monitoring functions into a single component, reducing the need for additional electrodes and minimizing space usage within the battery. By combining temperature sensing and potential referencing, this approach improves the battery management system's accuracy, reliability, and efficiency.

It is an advantage of embodiments of the present invention that by using the electrolyte of the battery for operation of the sensor, the design of the sensor becomes simple and its size can be reduced. It can be made thinner and also the lateral dimensions can be reduced compared to sensors which have their proper sensor electrolyte, making them more bulky and more complex. The thickness of the sensor can for example be below 10 $\mu$m. Also, because of the electrolyte contact, the sensor electrodes can be used as a reference electrode as well, combining two functionalities into a single device. This again increases the ratio between the amount of information and the volume required to achieve it.

It is, moreover, an advantage of embodiments of the present invention that since the sensor electrodes interact reversibly with the electrolyte, the long-term stability of the sensor signal is easier to maintain. By using an ion-conductive coating, the interface can be stabilized effectively. Also, any change in the state-of-charge of the sensor electrodes, which could influence the signal, can be recalibrated with minimal current because of the tiny amount of charge that thin-film sensor electrodes store.

In embodiments of the present invention, the battery's electrolyte is a liquid electrolyte. Suitable liquid electrolytes may comprise lithium salts such as lithium perchlorate (LiClO$_4$), lithium hexafluorophosphate (LiPF$_6$), or lithium bis(trifluoromethanesulfonyl)imide (LiTFSI) dissolved in liquid organic solvents like propylene carbonate or ethylene carbonate, as is common in commercial lithium-ion batteries. These electrolyte compositions may be selected based on their compatibility with lithium-ion battery requirements, such as ionic conductivity, chemical stability, and safety.

Regarding the integration of the sensor, no strict electrolyte requirements are imposed specifically for the sensor's operation. Instead, the electrolyte should primarily be optimized to meet the performance and efficiency needs of the battery, including factors like stability under high voltage, ionic mobility, and thermal properties. However, for seamless sensor integration, it is advantageous if the electrochemical window of the electrolyte can accommodate the potential range of the sensor's electrodes.

Alternatively, different types of solid electrolytes may be used as battery electrolyte in embodiments of the present invention, providing a range of options for tailoring battery performance to specific application needs. Examples of suitable solid electrolytes include ceramics, such as lithium phosphorus oxynitride (LiPON), garnet-type structures like lithium lanthanum zirconium oxide (LLZO), lithium nitride-based materials, and perovskite structures such as lithium lanthanum titanate (LLTO). Each type of solid electrolyte offers distinct properties: ceramics and garnets generally exhibit high ionic conductivity and stability, while perovskites and lithium nitrites may provide enhanced mechanical strength or compatibility with lithium-metal anodes.

Similar to liquid electrolytes, no specific requirements are imposed on the solid electrolyte solely for sensor integration. Instead, the choice of solid electrolyte should primarily reflect the performance demands of the battery, such as maximizing ionic conductivity, improving stability at high voltages, and providing thermal stability. However, integrating the sensor within a battery using a solid electrolyte is simplified when the electrolyte's electrochemical window can accommodate the sensor electrodes' potential range. This compatibility criterion is typically met by most solid electrolytes available today.

In embodiments of the present invention the temperature sensor (100) is positioned in proximity to the positive battery electrode (220) to monitor temperature variations near the positive battery electrode or in proximity to the negative battery electrode (230) to monitor temperature variations near the negative battery electrode. The ability to position the sensor near either electrode allows for flexibility in design, enabling targeted temperature monitoring based on the specific needs of the battery's application. By tracking temperature changes at these critical locations, the system can adjust operational parameters to enhance battery safety, optimize performance, and mitigate degradation over time.

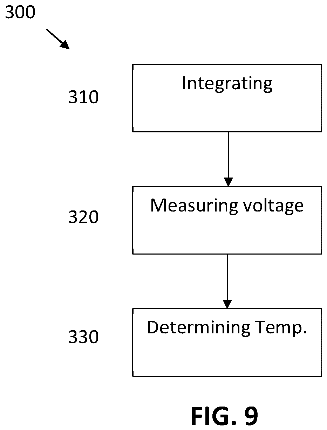

In a third aspect, the present invention provides a method (300) for monitoring the internal temperature of a lithium-ion battery (200) using an integrated thermogalvanic temperature sensor (100), as shown in FIG. 9. This exemplary flow chart details the key steps (310, 320, and 330) involved in obtaining accurate temperature measurements within the battery to optimize performance and safety.

- Step 310: In the first step, a thermogalvanic temperature sensor (100), in accordance with embodiments of the present invention, is incorporated directly within the battery. This integration involves positioning the sensor so that it utilizes the same electrolyte present in the battery, establishing a direct connection between the sensor's electrodes and the electrolyte. This is most easily done during the fabrication of the battery cells, although it is also possible to do integration after fabrication of the batteries.

- Step 320: Once integrated, the sensor measures a potential difference between the first sensor electrode (110) and the second sensor electrode (120). This potential difference is temperature-dependent due to the thermogalvanic properties of the electrodes in contact with the electrolyte. As the battery's internal temperature changes, this difference reflects those changes, providing a direct and precise indication of the internal thermal conditions. This method capitalizes on the thermogalvanic effect, where the potential difference varies in response to temperature, allowing the sensor to function efficiently within the electrochemical environment of the battery.

- Step 330: In the final step, the system determines the internal temperature of the battery (200) based on the measured potential difference. This may be achieved using a calibration curve or using known thermogalvanic coefficients for the materials. A processing device may translate the potential difference into an accurate temperature reading. This information may then be used by the battery management system to adjust operational parameters if needed, such as modifying (dis)charge rates of individual cells or modules, or activating thermal management mechanisms. Thus, an effective, real-time method for tracking internal battery temperature may be obtained. This may help to prevent overheating and improve battery longevity and performance.

Through these steps outlined in FIG. 9, the method (300) allows precise monitoring of the battery's internal temperature by leveraging the thermogalvanic temperature sensor. This integration enhances temperature management, leading to safer and more efficient operation of the lithium-ion battery.

The method (300) according to embodiments of the present invention may also include an additional step of measuring the potential difference between one of the electrodes (110, 120) of the thermogalvanic temperature sensor (100) and either the positive electrode (220) or the negative electrode (230) of the lithium-ion battery (200). In that case the thermogalvanic temperature sensor is used as reference electrode. The obtained potential difference can, moreover, be corrected for temperature effects, since the sensor measures the temperature as well.

In embodiments of the present invention the method (300) comprises an additional step of recalibrating the sensor by applying a current to the electrodes of the thermogalvanic temperature sensor (100). This recalibration step is designed to compensate for any variations in the sensor's performance that may arise due to changes in the state of charge (SoC) of the sensor electrodes over time. Specifically, a changing state-of-charge of the first or second sensor electrode may induce a change in the potential difference measured by the sensor, skewing the signal. By periodically applying a small, well-chosen current to each sensor electrode, the state-of-charge can be kept constant, eliminating the noise related to a changing state-of-charge. Due to the small form factor, this will result in negligible changes to the electrolyte salt concentration.

## Claims

1. A thermogalvanic temperature sensor (100) integrated into a lithium-ion battery, the sensor comprising:

   - a first sensor electrode (110) and a second sensor electrode (120), wherein both sensor electrodes (110, 120) are in ionic contact with electrolyte (240) of the lithium-ion battery,
   - wherein the first sensor electrode (110) and the second sensor electrode (120) have different thermogalvanic coefficients,
   - and wherein a protective ion-conductive coating (130) is present on the sensor electrodes.

2. The thermogalvanic temperature sensor (100) according to claim 1, wherein the first sensor electrode (110) is a lithium-ion electrode.

3. The thermogalvanic temperature sensor (100) according to any of the previous claims, wherein the second sensor electrode (120) comprises lithium metal.

4. The thermogalvanic temperature sensor (100) according to any of the claims 1 or 2, wherein the second sensor electrode (120) is a lithium-ion electrode.

5. The thermogalvanic temperature sensor (100) according to any of the previous claims, wherein the protective ion-conductive coating (130) comprises a solid state electrolyte.

6. The thermogalvanic temperature sensor (100) according to any of the previous claims, wherein the first sensor electrode (110) and/or the second sensor electrode (120) and/or the ion-conductive coatings (130) are thin films.

7. The thermogalvanic temperature sensor (100) according to any of the previous claims, wherein the sensor is configured for operating as both a temperature sensor and a potential sensor for the lithium-ion battery (200).

8. A lithium-ion battery (200) comprising:

   - a battery housing (210) containing a positive battery electrode (220), a negative battery electrode (230), an electrolyte,
   - and a thermogalvanic temperature sensor (100) according to any of the previous claims, wherein the sensor (100) is integrated within the battery (200) and in ionic contact with the battery's electrolyte (240).

9. The lithium-ion battery (200) according to claim 8, wherein the electrolyte is a liquid electrolyte.

10. The lithium-ion battery (200) according to claim 8, wherein the electrolyte is a solid electrolyte.

11. The lithium-ion battery (200) according to any of claims 8 to 10, wherein the thermogalvanic temperature sensor (100) is positioned in proximity to the positive battery electrode (220) to monitor temperature variations near the positive battery electrode or in proximity to the negative battery electrode (230) to monitor temperature variations near the negative battery electrode.

12. A method (300) for monitoring the internal temperature of a lithium-ion battery (200) comprising:

   - integrating (310) a thermogalvanic temperature sensor (100) according to any of the claims 1 to 7 within the battery wherein electrolyte of the battery is used as electrolyte for the thermogalvanic temperature sensor (100),
   - measuring (320) a temperature-dependent potential difference between the first sensor electrode (110) and the second sensor electrode (120),
   - determining (330) the internal temperature of the battery (200) based on the measured potential difference.

13. The method (300) according to claim 12, further comprising the step of recalibrating the sensor by applying a current to the sensor electrodes to account for changes in the state of charge of the sensor electrodes.

14. The method (300) according to any of claims 12 and 13, further comprising measuring the potential difference between one of the sensor electrodes (110, 120) of the thermogalvanic temperature sensor (100) and the positive battery electrode (220) or between one of the sensor electrodes (110, 120) and the negative battery electrode (230).

**FIG. 1**

**FIG. 2**

100

130                    105

140    110                    120        150

**FIG. 3**

240

110
140

Li          Li

Coating          130
                 120
Electrodes    Electrodes    150

Conductors    Conductors    105

**FIG. 4**

**FIG.5**

**FIG.6**

**FIG. 7**

**FIG. 8**

300

310 | Integrating |

320 | Measuring voltage |

330 | Determining Temp. |

**FIG. 9**

## EUROPEAN SEARCH REPORT

**Application Number**

EP 24 21 3791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NEELIMA R ET AL: "Use of solid-electrolyte cell as an active low-temperature sensor", SENSORS AND ACTUATORS A: PHYSICAL, ELSEVIER BV, NL, vol. 44, no. 1, 1 July 1994 (1994-07-01), pages 25-28, XP026529979, ISSN: 0924-4247, DOI: 10.1016/0924-4247(94)00778-0 [retrieved on 1994-07-01] | 1-7 | INV. H01M10/0525 H01M10/48 |
| A | * abstract; column 2, line 15, paragraph 25 - line 22 * | 8-14 | |
| A | US 2024/302223 A1 (LEE HO TAIK [KR] ET AL) 12 September 2024 (2024-09-12) * the whole document * | 1-14 | |

**TECHNICAL FIELDS SEARCHED (IPC)**

H01M

The present search report has been drawn up for all claims

| Place of search | Date of completion of the search | Examiner |
|---|---|---|
| Munich | 19 May 2025 | Topalov, Angel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 3791

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2025

| Patent document cited in search report | Publication date | Patent family member(s) | | Publication date |
|---|---|---|---|---|
| US 2024302223 A1 | 12-09-2024 | KR 20240138343 A | | 20-09-2024 |
| | | US 2024302223 A1 | | 12-09-2024 |

For more details about this annex : see Official Journal of the European Patent Office, No. 12/82